# EUROPEAN PATENT APPLICATION

(11) **EP 4 529 964 A1**
(43) Date of publication of application: **02.04.2025**
(21) Application number: 23461652.2
(22) Date of filing: 26.09.2023
(51) Int. Cl.: B01D 1/30, B01D 3/00, B01D 3/34, B01D 3/42, B01D 5/00

(54) **A DISTILLATION METHOD AND SYSTEM**

(71) Applicant: Centrum Badan i Rozwoju Technologii dla Przemyslu S.A., 00-645 Warszawa (PL)
(72) Inventor: PUTYNKOWSKI, Grzegorz, 00-193 Warszawa (PL); SOCHA, Robert, 32-091 Michalowice (PL); BINIAS, Dorota, 43-502 Czechowice-Dziedzice (PL); BINIAS, Wlodzimierz, 43-502 Czechowice-Dziedzice (PL)
(74) Representative: Kancelaria Eupatent.pl Sp. z.o.o

(57) **Abstract**

A system for distilling a mixture of liquids comprises: a distillation vessel (1); a temperature and pressure measuring system (11); a separator (3a) to separate mist droplets and/or foam from the vapor stream exiting the distillation vessel (1); a first cooler (5) to cool the vapor stream with the first refrigerant, after it leaves the separator (3a) or rectification column (3c), to produce a condensate stream within the first cooler (5); and a condensate tank (6) to collect the condensate after it leaves the first cooler (5). The distillation vessel comprises: an inlet (16) for introducing a liquid mixture into the distillation vessel (1); an outlet for discharging a vapor stream; an inlet for condensate from the system; a heater (9) for heating the liquid mixture to produce a vapor stream within the distillation vessel (1); and a safety valve (17). The system further comprises a compressor (7) for compressing and adiabatically heating a working gas. The distillation vessel (1) comprises a gas inlet (8) designed to barbotically introduce the working gas from the compressor (7) into the liquid mixture within the distillation vessel (1). The gas inlet (8) is provided with a system (81, 83) for generating a stream of gas bubbles (12) in the distilled liquid.

## Description

### TECHNICAL FIELD

The present invention pertains to a distillation method and system, specifically a system that involves adiabatic conversion.

### BACKGROUND

Distillation, a process extensively used in the chemical industry and other sectors, primarily serves to separate liquid mixtures for reuse by capitalizing on the differences in the boiling temperatures of the mixture's components. However, distillation can often be energy and time-consuming. Many mixtures contain components that boil at high temperatures, necessitating the use of low pressures to achieve lower boiling points or the implementation of steam distillation. Both these strategies can potentially increase the cost of the distillation process. Typically, during distillation, the mixture is heated to its boiling point under specific pressure conditions, and the resulting vapors are condensed using heat exchange devices such as condensers. However, standard condenser designs do not allow the energy extracted from the condensation process, in the form of heat, to be reused or stored. This inability leads to energy losses.

To attain a higher degree of separation of the mixture's components, particularly when components have close boiling points, rectification, also known as fractional distillation, is carried out. This process involves repeated evaporation and condensation of the mixture's components and takes place in rectification columns. In certain setups, distillation processes may be merged with rectification processes using packed columns. However, these techniques require additional energy input.

### SUMMARY OF THE INVENTION

In light of the aforementioned drawbacks, it would be beneficial to develop a solution that reduces the energy consumption associated with distillation and, preferably, rectification as well. Such a solution could significantly decrease the operational costs of these processes, thereby enabling more frequent utilization of distillation for purification and separation of raw materials. For instance, this could extend the use of distillation for purifying post-reaction organic solvents (thus facilitating their reuse), and for distilling contaminated water or other mixtures (consequently concentrating waste).

The object of the invention is a system and a method designed to carry out distillation with improved efficiency.

The solution according to the invention aims to increase the efficiency of the distillation process with the same energy input or alternatively, to further decrease the energy required.

The present solution involves a separate or parallel application, in both the distillation and rectification processes, of the flow of gas and/or vapors of the separated substances and turning and directing heat streams from the coolers and the condensate tank back to the distillation vessel.

In one aspect, the invention relates to a system for distilling a mixture of liquids, the system comprising: a distillation vessel comprising: an inlet for introducing a liquid mixture into the distillation vessel; an outlet for discharging a vapor stream; an inlet for condensate from the system; a heater for heating the liquid mixture to produce a vapor stream within the distillation vessel; and a safety valve. The system further comprises a temperature and pressure measuring system; a separator to separate mist droplets and/or foam from the vapor stream exiting the distillation vessel; a first cooler to cool the vapor stream with the first refrigerant, after it leaves the separator or rectification column, to produce a condensate stream within the first cooler; and a condensate tank to collect the condensate after it leaves the first cooler. The system further comprises a compressor for compressing and adiabatically heating a working gas. The distillation vessel comprises a gas inlet designed to barbotically introduce the working gas from the compressor into the liquid mixture within the distillation vessel. The gas inlet is provided with a system for generating a stream of gas bubbles in the distilled liquid.

This design of the system makes it possible to realize distillation with adiabatic conversions in the compressor and heat pump, which cause a significant increase in the temperature of the working medium and, on the principle of additionally forced barbotage in the distillation vessel, during which a consecutive adiabatic transformation takes place, during which heat is removed from the distillation mixture, accompanied by increased evaporation of the liquid. This results in a multiplied mixing of the feedstock in the distillation vessel, during its heating, providing a significant increase in the liquid evaporation surface area, multiplying the vapor saturation of the distillate liquid formed and expanding gas bubbles during the heating of the feedstock, and, in addition, the breakdown of possible aggregates formed from solid particles suspended in the mixture, as well as a faster removal of the generated vapors from the interior of the distillation vessel and thus a faster transport of the vapors to the rectification column or to the condensers, as well as a reduction in heat loss by its transfer from the condensers via adiabatic transformation to the distillation vessel. As a result of the adiabatic transformation, distillation time is reduced thus distillation efficiency increases.

The system for generating gas bubbles can be installed at the bottom of the distillation vessel. This provides preferably barbotage conditions: the working gas injected into the feedstock in the form of fine bubbles removes unwanted liquids or sediments from the bottom of the distillation vessel, so that the contents of the distillation vessel are well mixed.

The system for generating the stream of gas bubbles may have the form of a tube terminated by a diffuser The diffuser provides an efficient barbotage of the liquid in the distillation vessel by adiabatic expansion of the working gas in the liquid mixture in the case of smaller volume distillation vessels, preferably in the range of 1 to about 50 dm³.

The system for generating the stream of gas bubbles may have the form of a perforated spiral tube positioned with perforation openings towards the bottom of the distillation vessel, wherein the outlets of the perforation openings are preferably located at a distance from 1 to 150 mm from the surface of the bottom of the vessel for a vessel preferably having a volume of more than 50 dm³. The perforated spiral tube is suitable for distillation vessels with larger volumes, preferably volumes of more than 50 dm³, providing an even barbotage on the bottom surface of the distillation vessel, and removing unwanted liquids or sediments from the bottom of the distillation vessel, so that the contents of the distillation vessel are better and evenly mixed.

The perforated spiral tube may have a tube diameter of from 10 mm to 25 mm, and each of its perforation openings may have a diameter of from 0.1mm to 1 mm. This design provides a more efficient and volume-appropriate barbotage of the working gas in the liquid mixture.

The system may further comprise a rectification column for rectifying the vapor stream leaving the separator and a second cooler for cooling the vapor stream from the rectification column with a second coolant having a temperature higher than the temperature of the first coolant of the first cooler, and the separator of mist and/or foam droplets is in the form of a cyclone or a tank filled with Raschig rings, wherein the separator comprises a valve configured to direct the vapor stream separated from the mist and/or foam droplets to the rectification column or to the first cooler. Such a design enables a more thorough purification of the components of the mixture with a lower process capacity using the rectification column, or a faster separation of components whose purity is ensured by the composition of the distillation feedstock or no particular purity of the distillate is required, e.g., in sludge or wastewater thickening processes.

The system may further comprise a heat pump associated with the compressor for recovering heat from the process of cooling the vapor stream in the first cooler and/or cooling the vapor stream in the second cooler and/or cooling the condensate in the condensate tank, wherein the heat pump is coupled with a heating medium pipe and with a refrigerant pipe for receiving heat from the vapor stream in the second cooler and/or the first cooler and for supplying the received heat to the distillation vessel and/or the compressor, wherein the compressor is installed directly next to the distillation vessel for supplying said heat received via the heat pump to the distillation vessel via the working gas. This design limits the energy consumption of the process by reducing significant heat losses in the two coolers, compared to existing distillation systems.

The system may further comprise a heat exchanger for heating the working gas before the working gas is introduced into the compressor, wherein the heat exchanger has an inlet for a heating medium supplied from a heating medium pipe coupled to the heat pump. This design preheats the working gas, thereby increasing the temperature of the gas at the outlet of the compressor after adiabatic compression. This results in a more efficient transfer of energy to the distillation feedstock, reducing the energy consumption required for heating the feedstock.

In another aspect, the invention relates to a method for distilling a mixture of liquids, comprising the steps of: distilling the liquid mixture in a distillation vessel to produce a vapor stream; cooling the vapor stream in a first condenser to produce a condensate stream leaving the first condenser; and collecting the condensate stream in a condensate tank. During distillation, the liquid mixture in the distillation vessel is barbotized with a working gas, which is introduced into the liquid mixture through a gas inlet at a pressure of 0.1 bar to 10 bar, with a temperature of 280 K to 600 K, maintaining a volumetric flow rate of the working gas during distillation in the range of 0.001 m³/min to 5 m³/min. The method further comprises separating, in a separator, mist and/or foam droplets from the vapor stream from the distillation vessel, prior to entry of said vapor stream onto the rectification column and/or cooling in the first cooler. This method enables distillation with adiabatic conversions based on the principle of directed energy flow in the form of heat and elevated feedstock temperature and barbotage. This ensures adequate mixing of the feedstock in the distillation vessel while it is being heated, and also provides a significant increase in the vapor surface area of the liquid, a multiplication of the vapor saturation of the distilled liquid formed and expanding gas bubbles while the feedstock is being heated, and furthermore a breakdown of possible micelles formed from solid particles suspended in the mixture, as well as a faster removal of the generated vapors from the distillation vessel and their transport through the distillation system, a reduction in distillation time and energy consumption.

A liquid mixture containing water, a saturated brine solution and/or calcium hydroxide Ca ₂ can be distilled in an amount of 0.1 g to 200 g for each 1 kg of the liquid mixture. This allows the acids or acidic vapors to be removed or chemically bound during distillation. The brine in aqueous mixtures displaces components in the form of organic solvents intensifying their evaporation during the process.

At least one working gas can be selected from the group consisting of air, nitrogen, carbon dioxide, hydrogen, and a noble gas. The use of one of the above working gases provides suitable process conditions depending on the composition of the liquid mixture, wherein air may be used for the distillation of mixtures of chemically inert liquids; nitrogen, carbon dioxide or noble gases may be used for mixtures of liquids containing oxidizable or flammable substances. Hydrogen may be used for liquid mixtures with high boiling points.

The working gas can be introduced through the gas inlet in the form of a tube terminated by a diffuser. The use of a diffuser ensures efficient barbotage of the working gas in the liquid mixture in the case of smaller volume containers, preferably up to about 50 dm³.

The working gas can be introduced through the gas inlet in the form of a perforated spiral tube, positioned with perforation openings towards the bottom of the distillation vessel, with a diameter of the perforated tube from 10 mm to 25 mm and a diameter of the perforation openings from 0.1 mm to 1 mm. This ensures that unwanted liquids or sediments are removed from the bottom of the distillation vessel, so that the contents of the distillation vessel are better and more evenly mixed and evaporated. It also facilitates thermodynamic heat exchange.

The method may further comprise the step of recovering heat from the process of cooling the vapor stream in the first cooler and/or cooling the vapor stream in the second cooler by means of a heat pump coupled to the heating medium pipe and to the refrigerant pipe, wherein said heat recovery involves the transfer of heat between the working gas before it is compressed, subsequently leaving the heat pump via the heating medium pipe, and the hot vapors from the first cooler and/or the second cooler, subsequently leaving the heat pump via the refrigerant pipe. This ensures that the energy consumption of the distillation process is limited.

### BRIEF DESCRIPTION OF DRAWINGS

The object of the invention is shown by means of example embodiments on a drawing, wherein:
Fig. 1 shows principles of operation of a distillation system according to a first embodiment of the invention;
Fig. 2 shows principles of operation of a distillation system according to a second embodiment of the invention;
Fig. 3 shows a distillation system according to a third embodiment of the invention;
Fig. 4A shows a first embodiment of a working gas inlet to a distillation vessel;
Fig. 4B shows a second embodiment of a working gas inlet to a distillation vessel.

### DETAILED DESCRIPTION

The process, as described by the invention, is executed in a distillation system, embodiments of which are shown in the figures. The process includes heating a liquid mixture (feedstock) to its boiling point while simultaneously performing barbotage using hot, compressed working gas, with distillate vapor expanding in the distilled mixture. The generated mixture of vapors from the distillation and the working gas is cooled in a condenser. It may also undergo rectification in a column before being cooled in the condenser. This process leads to the condensation of the vapors, effectively causing a phase separation between the condensate and the working gas. The resulting distillate is then collected in the condensate tank. The working gas can be returned to the distillation vessel for further barbotage of the feedstock.

Various gases can serve as the working gas for barbotage, including, but not limited to, air, nitrogen, carbon dioxide, hydrogen, or noble gases such as helium or argon. Air may be used for distilling mixtures of chemically inert liquids. Nitrogen, carbon dioxide, or noble gases may be used for liquid mixtures containing substances that are oxidizable or flammable. Hydrogen may be used for liquid mixtures that have high boiling points. The choice of the carrier gas largely depends on the properties of the substances to be distilled.

In the process according to the invention, adiabatic transformations occur during the compression of the working gas in the compressor. This causes the aspirated vapors and/or gases to be heated adiabatically while retaining the heat of conversion. The subsequent adiabatic transformation takes place at the barbotage stage. The working gas, injected into the distillation vessel through a system of aeration tubes, expands, thereby increasing the effective surface area of the boiling liquid, decreasing the density of the liquid, and transferring its heat to the already boiling liquid mixture, i.e., the feedstock in the distillation vessel. This results in an increase in the intensity of boiling, an expansion of the vapor surface area of the liquid, and an increased saturation of the vapor from the boiling substances.

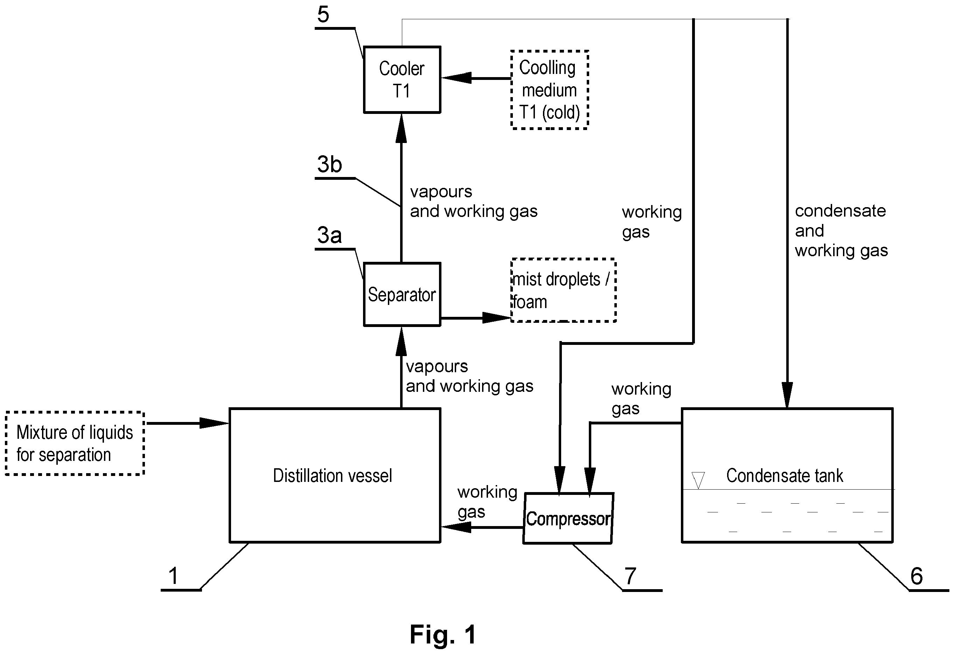

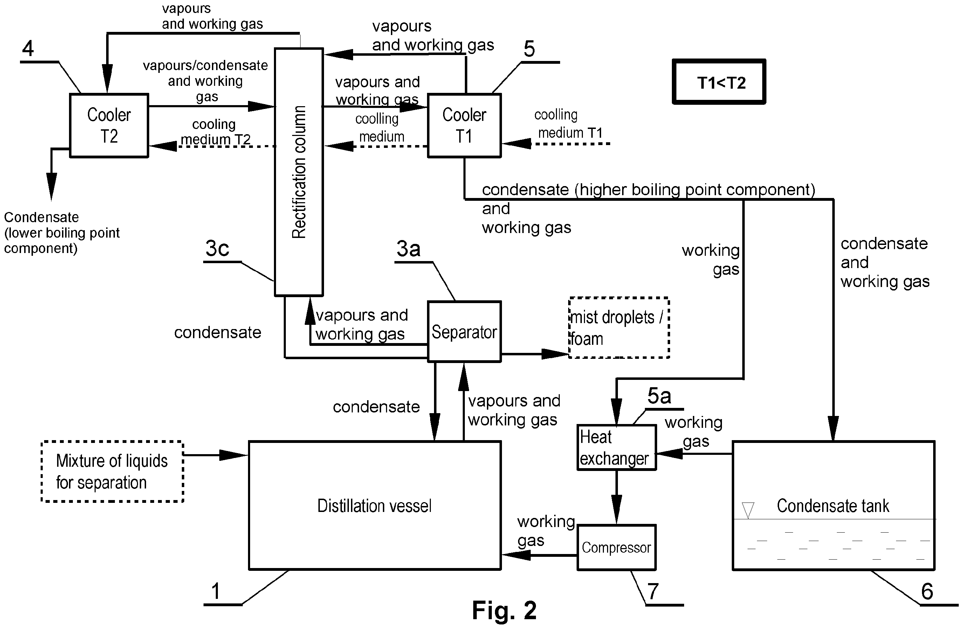

As schematically shown in Figs. 1 and 2, to carry out the distillation process, a feedstock (mixture) to be separated is introduced into the distillation vessel 1. The feedstock may consist of a mixture of liquids such as: a mixture of mutually soluble liquids including a mixture of solvents, for example, two or more polar liquids, or two or more non-polar liquids; or a mixture of immiscible liquids also referred to as an oil/water mixture (i.e., a mixture comprising polar and non-polar liquids). The mixture of liquids constituting the feedstock may, for example, be in the form of a suspension, emulsion, or dispersion, e.g., oil or polymeric, and may also include impurities in the form of particles, e.g., iron filings, mineral and other impurities (for mixtures of liquids in the form of used coolants from machining processes), dust, etc. Mixtures which may be separated on the basis of the difference in boiling points of the components by the method according to the invention are, for example: mixtures of solvents after cleaning of the equipment, liquid fuels, high-boiling substances, coolants, or post-production mixtures containing volatile substances, as well as other mixtures of liquid substances differing in boiling points. Optionally, water or a saturated brine and/or calcium hydroxide solution or a sorbent slurry may be introduced to the feedstock before it enters the distillation vessel to remove or chemically bind acidic vapors or undesirable substances.

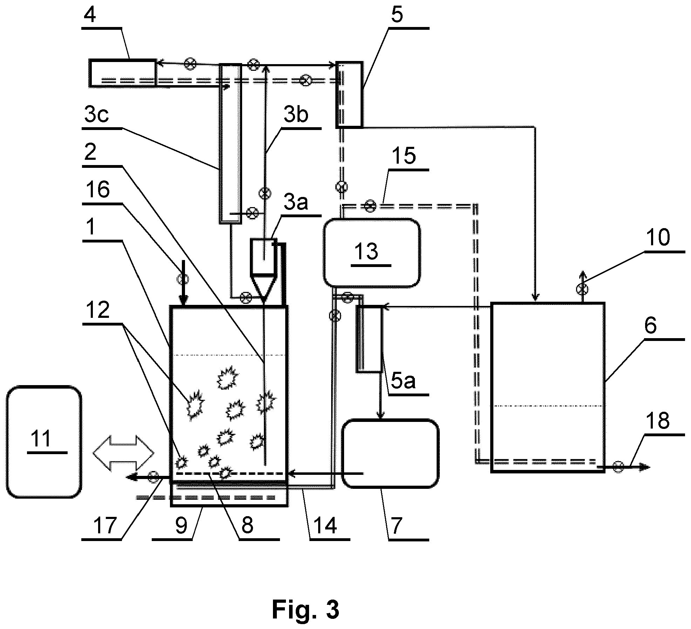

As shown in Fig. 3, in order to separate the liquids according to their boiling points, the feedstock is introduced into the distillation vessel 1 through a feedstock inlet 16 and the working gas through a gas inlet 8 located at the bottom of the distillation vessel 1. Preferably, the gas inlet 8 is situated at a distance from 1 mm to 150 mm, more preferably from 20 mm to 50 mm, from the surface of the bottom of the distillation vessel 1. Temperatures and pressures are measured by a corresponding measurement system 11.

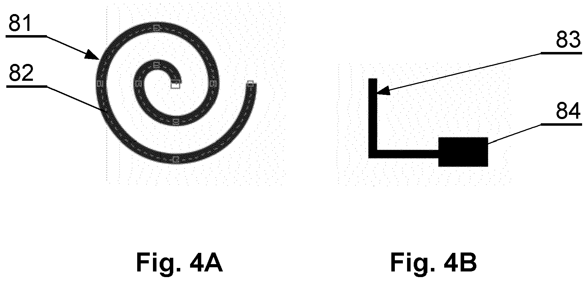

The gas inlet 8 in a first embodiment thereof as shown in Fig. 4A in a view from the bottom, may be in the form of a perforated spiral tube 81, with a tube diameter of 10 mm to 25 mm and a diameter of the perforation openings of the tube of 0.1 mm to 1.0 mm. The gas is introduced inside the distillation vessel 1 through the perforation openings 82 in the spiral tube 81, into which it is forced by one of the open ends of the tube (the other end is closed). The perforation openings 82 are directed towards the bottom of the distillation vessel 1. This provides preferable barbotage conditions: the working gas injected into the feedstock in the form of a stream of fine gas bubbles 12 removes undesirable liquids or sediments from the bottom of the distillation vessel 1, so that the contents of the distillation vessel 1 are well mixed. The number of perforation openings 82 and their arrangement within the spiral tube 81 is selected as required, e.g., according to the size of the distillation vessel and the desired capacity of the process to be carried out. The larger the container or the greater the desired process capacity, the greater the total number of perforations and the greater the number of perforation openings 82 per unit area of the spiral tube 81. Preferably, the perforation openings 82 may be arranged every 2.5 cm along the length of the tube. The spiral tube 81 may have an outer diameter substantially equal to the cross-sectional diameter of the distillation vessel 1, and the pitch of the spiral, i.e., the distance between adjacent coils (measured from the axis of the coils), may range from 2cm (for two inner coils) to 10 cm (for two outer coils), or it may be constant and be, for example, 5 cm.

The gas inlet 8 in a second embodiment thereof, as shown in Fig. 4B in a view from the bottom, may be in the form of a tube 83 ending in a diffuser 84, which is more advantageous when using distillation vessels 1 of small volume, i.e., up to about 50 dm³. For the distillation of liquids with low density and low surface tension (e.g., ethers), the diffuser may also be used for large volumes. The diffuser constitutes a component made of compressed/baked stainless or glass alloy powders or, in the simplest case, is a perforated tube. The porous structure of the diffuser causes the working gas stream to disperse in the diffuser channels and escape into the distillation mixture in the form of fine gas bubbles 12. The working gas escapes into the vessel over the entire surface of the porous diffuser. Similar solutions are used, for example, in the air saturation of aquaria.

The gas inlet 8 is supplied with working gas previously heated adiabatically in a compressor 7. At the initial stage of the process, the compressor 7 is supplied with working gas taken from the working gas tank, or from air (when the gas is air). In further stages of the process, on the other hand, the compressor 7 is supplied with working gas returned from the distillation process - i.e., taken (sucked) from a condensate tank 6 - from above the liquid (condensate) mirror and/or taken at the outlet of a first cooler 5, in which the mixture of vapor and working gas is cooled by condensing the vapor - as schematically shown in Fig. 1 and 2.

The compressor 7, which may be a rotary, screw, reciprocating, vane, vortex, circulating, gear, or other type of the compressor, forces a unidirectional gas flow with a minimum compression of 1% relative to the inlet pressure. The hot gas supplied to the gas inlet 8 is compressed by the compressor 7 to a pressure ranging from 0.1 bar to 10 bar and is heated so that the working gas has a temperature at the gas inlet 8 within the range of 320 to 600 K. During the distillation process, the volumetric flow rate of the working gas is maintained within the range of 0.0001 m³/min to 5 m³/min. Supplying the working gas with these parameters through the gas inlet 8 of the aforementioned design ensures adequate mixing of the feedstock in the distillation vessel 1 during its heating. This also ensures a significant increase in the liquid evaporation surface, thereby multiplying the saturation with vapor of the distilled liquid of the emerging and expanding gas bubbles 12 during the heating of the feedstock. Furthermore, it ensures the breakdown of possible aggregates formed from solid particles suspended in the mixture. Additionally, it ensures a faster removal of the vapors formed from inside the distillation vessel and therefore a faster transport of the vapors to the rectification column or to the coolers.

The distillation vessel 1 may have a volume of between 0.1 dm³ and 100 m³. For example, the distillation vessel may be a cuboid with dimensions of, for example, 400x400x625 mm or preferably in the form of a cylinder. The distillation vessel 1 may be designed to be filled with feedstock up to 80% of its volume, preferably up to 60% of its volume. The distillation vessel 1 and the condensate tank 6, which has a small volume of up to 1 m³ and which operates at a pressure difference of less than 0.01 bar, may be rectangular in shape. In other cases, the shape of the distillation vessel 1 and the condensate tank 6 should be designed to withstand atmospheric pressure (in the case of vacuum distillation) or overpressure (in the case of significant pressures of the working gases compressed in the compressor 7). The shape of the tanks may be conditioned by the availability of finished structures and instrumentation in the form of flaps, valves, seals, etc.

The distillation vessel 1 is provided with a heating system for heating the feedstock and has side walls and a bottom with a diaphragm heating system comprising a heater 9, in the form of, for example, electric heaters or steam coils with adjustable power and temperature of the heating medium. The heater 9, in the form of electric heaters, is preferably located under the bottom of the distillation vessel 1 and/or inside the distillation vessel 1, for example, heaters immersed in the feedstock and/or on the walls of the distillation vessel.

In the distillation vessel 1, the components of the mixture are separated as a result of differences in boiling temperature and vapor pressure above the liquid. The higher-boiling components remain in the liquid state and one or more of the lower-boiling components evaporate, forming vapors which rise with the working gas and are transported to a separator 3a for the separation of mist droplets and/or foams from the mixture of vapor and working gas. The separator 3a may take the form of a cyclone or a tank filled with rings (e.g., Raschig rings). The size of the rings should allow the working medium to flow freely together with the vapors. The separator 3a should be fitted with thermal insulation to prevent heat loss and unnecessary condensation of the product.

After passing through the separator 3a, the mixture of vapor and working gas may be directed to the first cooler 5, as shown schematically in the embodiment example in Fig. 1, or to rectification column 3c and two coolers: the first cooler 5 and the second cooler 4, as shown schematically in the embodiment example in Fig. 2.

In the system shown schematically in Fig. 2, vapors are directed from the top of rectification column 3c to the second cooler 4 to be condensed therein, and the condensate is directed back to rectification column 3c to intensify the rectification process (to obtain a higher degree of purity of the distilled component of the liquid mixture). The condensate has a lower temperature than the vapor and, flowing down the rectification column 3c with filling, causes a thermodynamic exchange consisting in the condensation of the higher-boiling components from the vapor, while the lower-boiling component is evaporated from the condensate. From the top of column 3c, the remainder of the vapor is directed to the first cooler 5, where it is condensed and discharged into the condensate tank 6. The division of the vapor flow with the working medium in the form of gases into the second cooler 4 (i.e., the reflux cooler) and the first cooler 5 (i.e., the product cooler) should be adjusted in each case to the type and composition of the distillation mixture.

Thus, in the system according to the invention, depending on the amount of feedstock to be separated, the type of substances to be separated, and the desired degree of purity of the components to be separated, distillation may be carried out using: the distillation vessel 1, the separator 3a, the tube 3b, and the first cooler 5, or fractional distillation (rectification) using: the distillation vessel 1, the separator 3a, the rectification column 3c, and the two coolers 4 and 5.

For each of the above-described embodiments of the invention, the vapors, directly from the separator 3a, or respectively after passing through the rectification column 3c, are directed to the first cooler 5, where they are cooled, and the mixture of condensate and working gas is directed to the condensate tank 6. The condensate tank 6 also serves to separate the liquid condensate collecting at the bottom of the condensate tank 6 and the working gas, which is returned optionally through heat exchanger 5a, where it may be heated by a hot medium from a heat pump 13 or directly supplying the inlet of the compressor 7. The heat pump 13 in this possible design configuration has the task of collecting heat from the first cooler 5 and the second cooler 4 or the condensate in the condensate tank 6 and transferring it to the working gas compressed in the compressor 7 via heat exchanger 5a. The condensate tank 6 is equipped with a deaeration valve 10, the opening of which ensures that the pressure prevailing in the distillation system is equalized with the ambient pressure. The increase in pressure in the distillation system is caused by excess working gas sucked in by the compressor 7. The working gas is sucked in through the deaeration valve 10 during the start-up of the system. Once the thermodynamic conditions of the process are established, no significant amounts of gas should pass through the deaeration valve 10. Only volume fluctuations caused by changes in boiling temperatures are compensated for. Exchanger 5a together with the heat pump 13 is feasible in the case of significant volumes of distilled mixtures. This system returns the thermal energy of the hot vapors to the working gas compressed in the compressor 7. This return of thermal energy significantly reduces the electricity consumption of the heater 9.

As shown schematically in Fig. 3, the quantity of condensate returned to the process in column 3c (vapor condensed in the second cooler 4) can be adjusted to match the thermodynamic conditions of the process. The proportions of the flowing streams, namely the vapor and returned condensate, can be regulated by the valve settings at the top of the rectification column 3c. Excess condensate from the separator 3a and, optionally, from the rectification column 3c is transported by gravity via a pipe 2 to the distillation vessel, located near the bottom of the vessel. The distillate (vapor), after being condensed in the first cooler 5, flows into the condensate tank 6.

The first cooler 5 and the second cooler 4 can be independently supplied with refrigerants, or as shown schematically in Fig. 3, coolers 4 and 5 can be supplied with refrigerant circulating in a closed circuit with heat pump 13. The refrigerant routing can be executed in a manner that provides a lower temperature for the first refrigerant supplying the first cooler 5, and a higher temperature for the second refrigerant supplying the second cooler 4, as shown in Fig. 2.

Heat pump 13 is designed to receive heat from the heat flux from the vapors (distillate) being cooled in coolers 4 and 5, and to supply this heat to the heat exchanger 5a and/or to the heating system of the distillation vessel 1. This arrangement allows for some of the heat from the vapor condensation process in coolers 4 and 5 to be recovered and used for heating via a heating medium pipe 14 and for cooling via a refrigerant pipe 15. Heat pump 13 ensures adequate heat exchange between the heating medium from pipe 14 and the refrigerant from pipe 15.

In the distillation process implemented by the method according to the invention with adiabatic conversion, the condensate stream can be increased from about 10% to 150%, compared to distillation without adiabatic conversion, depending on the type and composition of the liquid mixtures to be distilled. This also results in a significant reduction in energy consumption and an acceleration of the distillation process.

### Process Example 1 - Rectification of a Liquid Mixture

Feedstock was introduced into a distillation vessel with a heated bottom: a liquid mixture of known composition, approximately 75% water, 25% methanol, and mechanical impurities in small amounts (less than 1%). Through the gas inlet in the form of a tube ending in a diffuser placed at the bottom of the distillation vessel, approximately 20 mm from the bottom, the working gas was injected into the feedstock by means of a gear compressor. The working gas, air, was taken from the condensate tank 6. The working gas parameters at the gas inlet 8 were: pressure: 5 bar, temperature: approximately 450 K. The volumetric flow rate of the working gas was maintained at about 20÷30 dm³/min throughout the process.

The feedstock was heated to boiling conditions, i.e., to a temperature of about 350 K. Then, the mixture of water and methanol vapors and working gas was introduced into the separator 3a, which was a cyclone, and then onto the rectification column 3c. The vapors from the rectification column were directed to the second cooler 4. After the condensate stream from the second cooler 4 was directed to column 3c, a valve was opened to direct the vapors, along with the working gas, to the first cooler 5. After the stream was opened to the first cooler 5, the compressor 7 was switched on, which sucked the working gas (air) into the distillation system via the deaeration valve 10.

The valve settings in the system were adjusted to set the vapor flow proportions in such a way as to prevent flooding of the rectification column with condensate. Excessive condensate return causes the liquid to remain in the bed of column 3c and bubble the liquid. This causes an increase in system pressure and the thermodynamically unseparated liquid is expelled through the first cooler 5 into the condensate tank 6. This is a highly undesirable phenomenon that interferes with the distillation process. The condensate flow from the second cooler 4 ensured that the higher boiling component was condensed. The selected heater power of 1200W ensured a sufficiently large vapor flow. Too much power and vapor flow may prevent the free flow of condensate in the rectification column and cause the process to malfunction. The amount of air injected through the gas inlet (diffuser) did not interfere with the free flow of condensate in the rectification column. The condensate from the first cooler 5: methanol, was collected in the condensate tank 6, from which the working gas: air with methanol vapors, was returned via the compressor 7 back to the distillation vessel. The rectification should be stopped when the temperature at the top of the rectification column rose above 339 K.

The product obtained: the methanol collected in the condensate tank 6, had a purity of about 94.5%. The increase in distillation yield [Ww] was achieved between 170% and 190% of the distillation time without gas flow. The yield increase is the ratio of distillation time without gas flow to distillation time with gas flow.

### Process Example 2 - Emulsion Distillation

A feedstock in a form of an emulsion representing waste from water washing processes of dispersion paints, was introduced into the distillation vessel. The dispersion content of the mixture varied between 5 and 20% w/w.

The working gas (air) was injected via the gas inlet tube ending in a diffuser, positioned 20 mm above the bottom of the distillation vessel. The working gas parameters at the gas inlet were: pressure: 3.4 bar, temperature: 390 K. The volume flow rate of the working gas was consistently maintained at 15÷20 dm³/min throughout the process.

The feedstock was heated to boiling conditions, i.e., 373 K. The resulting mixture of vapors and the working gas was introduced into the cyclone separator and then into the first cooler 5. The condensate from the first cooler 5 was directed to a condensate tank 6 with the deaeration valve 10 open, allowing the working gas (air) to escape into the environment or be sucked in. The compressor 7 for compressing the working gas was supplied with ambient air via the deaeration valve 10. After adiabatic compression, the hot air was injected via the gas inlet 8 into the distillation vessel. Due to the use of air as the working gas, no closed circulation of this gas was used in the distillation system.

The distillate, which was water with a purity of more than 99.95%, was collected in the condensate tank 6. An increase in distillation yield (Ww) was achieved between 185% and 200%.

### Process Example 3 - Distillation of an Oil/Water Mixture

A feedstock in a form of an oil/water type liquid mixture of known composition: about 95% water, 5% machine oil from coolants, and impurities in small amounts (less than 2%), was introduced into the distillation vessel.

The working gas, carbon dioxide, was injected via a spiral perforated tube gas inlet, with perforations in the form of drilled openings, each with a diameter of 0.5 mm, spaced every 2.5 cm along the length of the tube. The tube was positioned 20 mm above the bottom of the distillation vessel, with the perforations facing downwards. The working gas parameters at the gas inlet were: pressure: 2 bar, temperature: 370 K. The volume flow rate of the working gas was consistently maintained at 9.5 dm³/min throughout the process.

The feedstock was heated to boiling conditions, i.e., 373 K. The resulting vapor/water/oil droplet mixture, along with the working gas, was fed into a cyclone separator 3a and then into the first cooler 5. The condensate from the condenser was directed to a condensate tank 6, from which the working gas: carbon dioxide and water vapor were returned to the distillation vessel via the compressor 7. Because the deaeration valve of the condensate tank 6 was closed, a vacuum was created in the condensate tank 6 by the suction of gases from this tank by the compressor 7, wherein the closed circuit of the working gas prevented it from escaping into the environment. The process used a heat pump, which cooled the vapors in the first cooler 5 and the condensate tank 6 and heated the working gas in the heat exchanger 5a and distillation vessel. Once the thermodynamic conditions of the process were established, the heat pump cooled the water vapor in the first cooler 5 to a temperature of approximately 310 K. Further cooling of the water took place in the condensate tank 6. The flow of the cold medium of the heat pump 13 in the condensate tank 6 had to be limited so that the water did not freeze. Lowering the temperature in the condensate tank 6 limited the amount of vapor drawn in by the compressor 7. The cold working gas drawn in from the condensate tank 6 was preheated in the heat exchanger 5a and then adiabatically reheated in the compressor 7 and injected into the distillation vessel 1. The hot working gas heated the distillation mixture and the effect of increasing the evaporation surface intensified the distillation process. The power of the heater 9 may have been reduced from 2 kW to 950 W.

In the condensate tank 6, the distillate was collected, which was water of more than 99.9% purity. The increase in distillation yield was achieved between 200% and 220%.

### Process Example 4 - Distillation of a Mixture with Brine Solution

Feedstock, a mixture of liquids together with a brine solution, of known composition: 20% residue from washing printing screens with acetone, 10% methanol, 30% extraction benzine and water saturated with sodium chloride (brine solution) in addition to 100%, was introduced into the distillation vessel.

The working gas, nitrogen, was injected via a spiral perforated tube gas inlet, with perforations in the form of drilled openings, each with a diameter of 0.5 mm distributed every 2.5 cm along the length of the tube. The tube was positioned 20 mm above the bottom of the distillation vessel, with the perforations facing downwards. The working gas parameters at the gas inlet were: pressure: 3 bar, temperature: 410 K. The volumetric flow rate of the working gas was consistently maintained at 25 dm³/min throughout the process.

The mixture was heated to boiling conditions, i.e., 330 K. The flammable solvent vapors, along with the working gas, were introduced through a droplet separator 3a, which was a cyclone, into a rectification column 3c, and then separated into the coolers 4 and 5. The compressor 7 was then activated. The condensate from the first cooler 5 was directed to a condensate tank 6, from which the working gas: nitrogen was returned via the compressor 7 back to the distillation vessel. The working gas was heated in a heat exchanger 5a, which was supplied with a heating medium heated using a heat pump - using the heat from the first cooler 5, in which the vapors from the distillation were cooled, and giving off heat in the heat exchanger. The system operated in a closed circuit with a vacuum in the condensate tank 6.

The condensate tank 6 collected the distillate, which was a mixture of organic solvents with 0.1% water content. Increases in distillation yield were achieved between 150% and 170%.

## Claims

1. A system for distilling a mixture of liquids, the system comprising:
- a distillation vessel (1) comprising:
- an inlet (16) for introducing a liquid mixture into the distillation vessel (1);
- an outlet for discharging a vapor stream;
- an inlet for condensate from the system;
- a heater (9) for heating the liquid mixture to produce a vapor stream within the distillation vessel (1); and
- a safety valve (17);
- a temperature and pressure measuring system (11);
- a separator (3a) to separate mist droplets and/or foam from the vapor stream exiting the distillation vessel (1);
- a first cooler (5) to cool the vapor stream with the first refrigerant, after it leaves the separator (3a) or rectification column (3c), to produce a condensate stream within the first cooler (5); and
- a condensate tank (6) to collect the condensate after it leaves the first cooler (5); **characterized in that**:
- the system further comprises a compressor (7) for compressing and adiabatically heating a working gas;
- the distillation vessel (1) comprises a gas inlet (8) designed to barbotically introduce the working gas from the compressor (7) into the liquid mixture within the distillation vessel (1);
- and the gas inlet (8) is provided with a system (81, 83) for generating a stream of gas bubbles (12) in the distilled liquid.

2. The system according to claim 1, wherein the system (81, 83) for generating the stream of gas bubbles (12) is installed at the bottom of the distillation vessel (1).

3. The system according to any of the preceding claims, wherein the system for generating the stream of gas bubbles (12), is in the form of a tube (83) terminated by a diffuser (84).

4. The system according to any one of claims 1 to 2, wherein the system for generating the stream of gas bubbles (12) has the form of a perforated spiral tube (81) positioned with perforation openings (82) towards the bottom of the distillation vessel (1), wherein the outlets of the perforation openings (82) are preferably located at a distance from 1 to 150 mm from the surface of the bottom of the vessel for a vessel preferably having a volume of more than 50 dm³.

5. The system according to claim 4, wherein the perforated spiral tube (81) has a tube diameter of from 10 mm to 25 mm, and each of its perforation openings (82) has a diameter of from 0.1 mm to 1 mm.

6. The system according to any of the preceding claims, further comprising a rectification column (3c) for rectifying the vapor stream leaving the separator (3a) and a second cooler (4) for cooling the vapor stream from the rectification column (3c) with a second coolant having a temperature higher than the temperature of the first coolant of the first cooler (5), and the separator (3a) of mist and/or foam droplets is in the form of a cyclone or a tank filled with Raschig rings, wherein the separator (3a) comprises a valve configured to direct the vapor stream separated from the mist and/or foam droplets to the rectification column (3c) or to the first cooler (5).

7. The system according to any of the preceding claims, further comprising a heat pump (13) associated with the compressor (7) for recovering heat from the process of cooling the vapor stream in the first cooler (5) and/or cooling the vapor stream in the second cooler (4) and/or cooling the condensate in the condensate tank (6), wherein the heat pump (13) is coupled with a heating medium pipe (14) and with a refrigerant pipe (15) for receiving heat from the vapor stream in the second cooler (4) and/or the first cooler (5) and for supplying the received heat to the distillation vessel (1) and/or the compressor (7), wherein the compressor (7) is installed directly next to the distillation vessel (1) for supplying said heat received via the heat pump (13) to the distillation vessel (1) via the working gas.

8. The system according to claim 6, further comprising a heat exchanger (5a) for heating the working gas before the working gas is introduced into the compressor (7), wherein the heat exchanger (5a) has an inlet for a heating medium supplied from a heating medium pipe (14) coupled to the heat pump (13).

9. A method for distilling a mixture of liquids, comprising the steps of:
- distilling the liquid mixture in a distillation vessel (1) to produce a vapor stream;
- cooling the vapor stream in a first condenser (5) to produce a condensate stream leaving the first condenser (5); and
- collecting the condensate stream in a condensate tank (6),
**characterized in that**:
- during distillation, the liquid mixture in the distillation vessel (1) is barbotized with a working gas, which is introduced into the liquid mixture through a gas inlet (8) at a pressure of 0.1 bar to 10 bar, with a temperature of 280 K to 600 K, maintaining a volumetric flow rate of the working gas during distillation in the range of 0.001 m³/min to 5 m³/min;
- and the method further comprises separating, in a separator (3a), mist and/or foam droplets from the vapor stream from the distillation vessel (1), prior to entry of said vapor stream onto the rectification column (3c) and/or cooling in the first cooler (5).

10. The method according to claim 9, wherein a liquid mixture containing water, a saturated brine solution and/or calcium hydroxide Ca(OH)₂ is distilled in an amount of 0.1 g to 200 g for each 1 kg of the liquid mixture.

11. The method according to claims 9 or 10, wherein at least one working gas is selected from the group consisting of air, nitrogen, carbon dioxide, hydrogen, and a noble gas.

12. The method according to any one of claims 9 to 11, wherein the working gas is introduced through the gas inlet (8) in the form of a tube (83) terminated by a diffuser (84).

13. The method according to any one of claims 9 to 12, wherein the working gas is introduced through the gas inlet (8) in the form of a perforated spiral tube (81), positioned with perforation openings (82) towards the bottom of the distillation vessel (1), with a diameter of the perforated tube from 10 mm to 25 mm and a diameter of the perforation openings (82) from 0.1 mm to 1 mm.

14. The method according to any one of claims 9 to 13, further comprising the step of recovering heat from the process of cooling the vapor stream in the first cooler (5) and/or cooling the vapor stream in the second cooler (4) by means of a heat pump (13) coupled to the heating medium pipe (14) and to the refrigerant pipe (15), wherein said heat recovery involves the transfer of heat between the working gas before it is compressed, subsequently leaving the heat pump (13) via the heating medium pipe (14), and the hot vapors from the first cooler (5) and/or the second cooler (4), subsequently leaving the heat pump (13) via the refrigerant pipe (15).
